# EUROPEAN PATENT SPECIFICATION

(11) **EP 2 001 731 B1**
(45) Date of publication and mention of the grant of the patent: **07.05.2014**
(21) Application number: 06717066.2
(22) Date of filing: 28.03.2006
(51) Int. Cl.: B62D 25/14, B62D 33/06, B62D 65/14

(54) **LAMINATED VEHICLE WALL**
LAMINIERTE FAHRZEUGWAND
PAROI DE VÉHICULE STRATIFIÉE

(43) Date of publication of application: 17.12.2008
(73) Proprietor: Volvo Lastvagnar AB, 405 08 Göteborg (SE)
(72) Inventor: NILSSON, Jan, S-425 39 Hisings-Kärra (SE); OLOFSSON, Bo, S-426 58 V Frölunda (SE); HOBAN, Martin, S-423 38 Torslanda (SE); TENHUNEN, Raimo, S-471 60 Myggenäs (SE); DYVERFORS, Michael, S-433 70 Sävedalen (SE)
(74) Representative: Fröhling, Werner Otto
(86) International application number: PCT/SE2006/000385
(87) International publication number: WO 2007/111543

(56) References cited:
- EP-A- 0 515 287
- EP-A1- 0 374 975
- WO-A1-2005/061314
- DE-C1- 4 409 081
- GB-A- 2 216 081
- GB-A- 2 329 363
- US-A1- 2004 113 460
- US-B1- 6 260 914
- US-B1- 6 695 374

## Description

### TECHNICAL FIELD

The present invention relates to a vehicle body according to the preamble of claim 1. The vehicle body can for example be used as a cockpit module in a cab for a cargo carrying truck, a bus, a car or any other vehicle within the automotive industry, or even a cabin for a train, a boat or an airplane.

### BACKGROUND OF THE INVENTION

In modern, efficient production of vehicles it is common to assemble larger sub-assemblies prior to a final installation in the vehicle, *e.g*. prior to a final installation in the cab of a vehicle. A sub-assembly can *e.g*. be a cockpit module comprising such units as a steering wheel adjustment, a climate system, a pedal plate but also an electrical central etc, *i.e.* a substantially complete cockpit assembly. Thus, it is well known *per* se to install a pre-assembled cockpit module into the cab of a vehicle.

However, cockpit modules are often pre-assembled in a mounting jig or fixture or in some other support arrangement which is detached after an assembly of the module. This is a clear disadvantage since the measures and other conditions of jigs, fixtures and the like must always be keep under thorough control to ensure that no errors are introduced into the assembled parts. The control is time-consuming especially considering that a manufacturer may have a plurality of support arrangements in different assembly plants. In addition, even the most rigorous control cannot fully eliminate the fact that mounting jigs and fixtures and the like represent potential sources of error in the production.

Hence, cockpit modules and other larger sub-assemblies should preferably be pre-assembled without the use of any mounting jig or fixture or the like. Some attempts have also been made in prior art to improve the pre-assembling of a cockpit module in this respect.

The European patent EP 0 736 445 B1 discloses a truck cab composed of two pre-assembled modules; a part cab module and a front module. The part cab module is based on a cab shell which is open at the front, *i.e.* the front wall is fully detached. The front module is based on the fully detached front wall of the cab, which wall serves as a system carrier and is completed by the attachment of at least a majority of vehicle parts and units arranged in the cab front area.

The United States patent US 5,863,093 discloses a firewall-dashboard assembly which facilitates easier installation and assembly of certain components. Specifically, the firewall is pre-assembled and combined with a dashboard sub-assembly prior to mounting these components to the truck cab. The firewall-dashboard assembly contains at least the instrument panel and the brake, clutch, and accelerator mechanisms.

The above patents disclose a cockpit module which is pre-assembled by using the entire front wall (firewall) of the cab as a mounting jig or fixture. In other words, the entire front wall is detached from the cab. However, The use of the entire firewall as a loose mounting jig or fixture for assembling a cockpit module involves several drawbacks.

A first exemplifying drawback is that the use of an entire front wall (firewall) as a mounting jig or fixture gives a large and heavy jig or fixture. This makes a handling of the jig or fixture and the complete assembled cockpit module more difficult. This is especially so if the front wall (firewall) *e.g*. comprises heavy reinforcing beams, *e.g*. beams for crashworthiness.

Another exemplifying drawback is that a cab without front wall (firewall) suffers from an increased instability in the structure, which may increase the risk for damages during assembly of the cab. Hence, for stability reasons it would be better to keep the front wall (firewall) in place during the assembly of the cab.

A further exemplifying drawback is that parts to be mounted on both the firewall and the cab cannot be mounted until the front wall (firewall) is mounted. Hence, it would be better to keep the front wall (firewall) in place to enable such mounting at an early stage of the cab assembling.

In addition, the front wall (firewall) is typically used as a lower support for the cab windscreen. The mounting of a detached loose front wall (firewall) provided with cockpit units onto the cab will therefore require a thorough and complicated fitting with respect to the cab so as to cause no extra tension in the windscreen or water leakage at the edges of the windscreen or the edges of the mounted front wall (firewall). The complicated fitting is i.a. related to the tolerances of the cab and the loose front wall (firewall). It is also caused by the plurality of different joints (cab<->firewall; cab<->windscreen; firewall<->windscreen) of different nature needing different joining and/or sealing means such as glues etc that are not always compatible with each other. Hence, to form a smooth and continuous cab surface suitable for the fitting of a windscreen it would be better to have the front wall (firewall) fixedly attached to the cab during the assembly of the cab.

Hence, there is a need for an improved sub-assembly for vehicles and an improved method for pre-assembling such sub-assemblies, which obviates or mitigates at least one of the above drawbacks.

The Document US-B1-6 695 374 discloses a vehicle cockpit assembly according to the preamble of claim 1.

### SUMMARY OF THE INVENTION

The present invention obviates or mitigates at least one of the above drawbacks by providing a vehicle body with a laminated wall. The laminated wall comprises the first wall and a second wall, wherein the second wall is fixedly attached to the vehicle body and provided with a plurality of receiving openings. The first wall has a plurality of assembly openings each provided with at least one sub-unit so as to form a substantially complete sub-assembly of the vehicle body, and each being arranged so as to substantially coincide with a corresponding receiving opening when the outer side of the first wall is attached to the inner side of the second wall. The outer side of the first wall is attached to the inner side of the second wall so that each assembly opening substantially coincides with at least one receiving opening to form said laminated wall.

The vehicle body is particularly characterized in that:
the second wall is a body-in-white firewall fixedly attached to the vehicle body and comprising a windscreen member, so as to form a substantially homogenous body with the vehicle body, and that the second wall is provided with assembly points for attaching the first wall to the second wall, and in that
the inner side of the first wall is provided with at least one assembly means - e.g. an assembly bracket or a framework - for facilitating the mounting of sub-units into the assembly openings.

The first wall in the vehicle body can have at least one assembly opening that is unique with respect to *e.g*. shape and size so as to be particularly adapted with small tolerances for mounting of one or several specific sub-units.

It is particularly preferred that the inner side of the first wall in the vehicle body is provided with sub-units mounted in the assembly openings so as to form a substantially complete sub-assembly - *e.g.* a cockpit module - to be mounted in the vehicle body.

It is also preferred that the second wall in the vehicle body is provided with at least two receiving openings that are substantially symmetrically arranged on each side of the center of the second wall. In particular embodiments of the present invention this makes it possible to use the same vehicle body structure for both left-hand-traffic and right-hand-traffic.

In an advantageous embodiment of the invention, the outer side of the first wall in the vehicle body has an elongated upper recess, whereas the inner side of the second wall has a corresponding elongated upper recess, which together forms a duct. In particular embodiments of the present invention this makes it possible form a defroster duct beneath a windscreen in the vehicle body.

In a suitable embodiment of the invention, the first wall in the vehicle body is arranged a distance from the second wall so as to create a compartment between the inner and outer walls, which compartment is filled with sound isolating material. In particular embodiments of the present invention this makes it possible to form an improved sound isolation section beneath a windscreen in the vehicle body.

In another embodiment of the invention, the first wall in the vehicle body is fixedly attached to the second wall by means of assembly points arranged on the outside of the vehicle body. In particular embodiments of the present invention this makes it easy for an assembly robot or the like to access the assembling points for attaching the first wall to second wall.

It is particularly preferred that the vehicle body is a cab for a cargo carrying truck and the laminated wall is a partition wall (firewall) arranged in front of the seat positions in the cab.

Further advantages of the present invention and embodiments thereof will appear from the following detailed description of the invention.

### BRIEF DESCRIPTION OF THE DRAWINGS

- Fig. 1: shows a schematic and partial inside view of a truck cab 100.
- Fig. 2a: shows a schematic view of the outer side of an exemplifying inner firewall 210.
- Fig. 2b: shows the inner side of the inner firewall 210 in Fig. 2a provided with assembling brackets 213A-213D.
- Fig. 3: shows a schematic view of a cockpit module 300 comprising the inner firewall 210 with cockpit sub-units mounted thereon.
- Fig. 4a: shows the cockpit module 300 in Fig. 3 assembled into the truck cab 100.
- Fig. 4b: shows a cross-section of the assembled cockpit module 300 taken along the lines A-A in Fig. 4a.

### DETAILED DESCRIPTION OF PREFERRED EMBODIMENTS

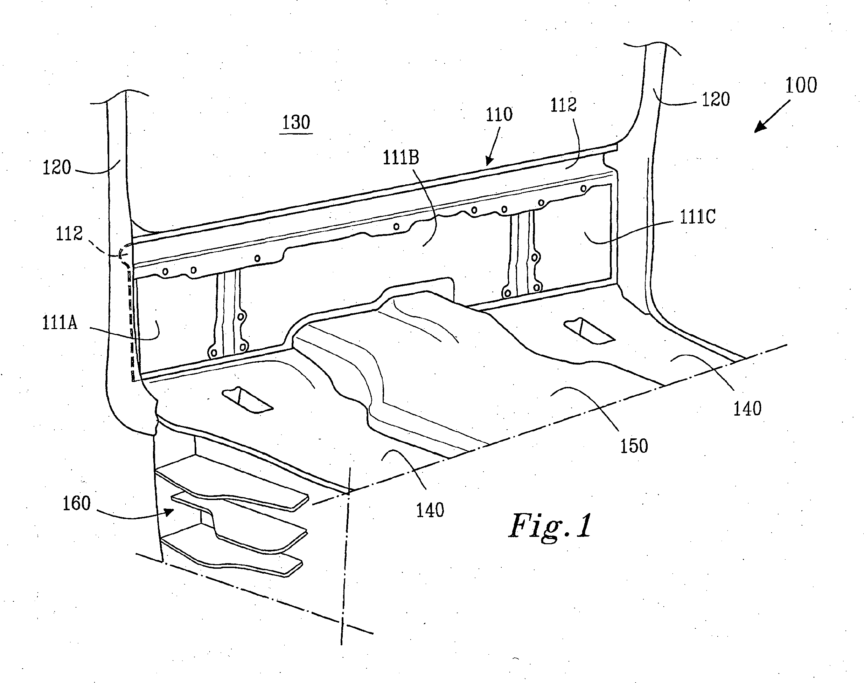

Fig. 1 shows a schematic and partial view of the inside of a vehicle body, here in the shape of an exemplifying truck cab 100. The truck cab 100 is in a stripped, so-called "body-in-white" condition with no sub-assemblies or modules yet installed.

In particular, the exemplifying truck cab 100 comprises a so-called body-in-white firewall 110, *i.e.* the stripped partition wall in front of the seat positions in the truck cab 100. The body-in-white firewall 110 shown in Fig. 1 is fixedly attached to the cab 100 so as to form a substantially homogenous body with the cab 100. The joint between the cab 100 and the body-in-white firewall 110 can be *e.g*. welded and/or soldered and worked to a smooth surface, *e.g*. suitable for the fitting of a windscreen.

The body-in-white firewall 110 further comprises three receiving openings 111A-111C arranged to receive different cockpit sub-units. The first left receiving opening 111A can *e.g*. be arranged to receive pedal plate and steering wheel adjustment units, the second center receiving opening 111B can *e.g*. be arranged to receive a heating, ventilation and air conditioning unit (HVAC unit), and the third right receiving opening 111C can *e.g*. be arranged to receive an electrical central unit. Naturally, the body-in-white firewall 110 may have receiving openings that are arranged to receive one or several sub-units and it may also have further or fewer openings of various forms and sizes and for different purposes.

The three receiving openings 111A-111C in the exemplifying body-in-white firewall 110 are separated by two substantially vertical beam-like pillars. However, it should be emphasized that the body-in-white firewall 110 may have other suitable members for separating the receiving openings, *e.g*. a steel wall or parts thereof or any other suitable wall or parts thereof.

It can also be seen in Fig. 1 that the left receiving openings 111A-111C - in particularly the left receiving opening 111A and the right receiving opening 111C - are arranged substantially symmetrically on each side of the center of the body-in-white firewall 110. This is preferred since the truck cab 100 may have to be adapted to right-hand-traffic or left-hand-traffic. A symmetric position for the receiving openings 111A and 111C makes it possible to have the steering wheel adjustment on either the right side or the left side of the cab 100 without making any changes in the body-in-white firewall 110.

In addition, the body-in-white firewall 110 in Fig. 1 comprises an exemplifying windscreen member 112. The windscreen member 112 is preferably an elongated beam provided with a C-shaped recess, which beam forms a part of the upper long side of the fixedly attached body-in-white firewall 110. The windscreen member 112 extend in a substantially harizontal direction substantially perpendicular to the intended traveling direction of the truck cab 100 so as to support the front windscreen (not shown in Fig. 1) of the truck cab 100 at the lower horizontal side of the windscreen. Two substantially vertical A-pillars 120 are arranged to support the windscreen at its vertical sides and the roof of the cab 100. The windscreen member 112, the A-pillars and the roof define a substantially rectangular windscreen opening 130, which extends in a substantially vertical direction above the body-in-white firewall 110.

The truck cab 100 in Fig. 1 is further comprising: a floor 140 arranged for i.a. supporting passenger seats (not shown); an engine tunnel 150 arranged to accommodate at least a part of the truck engine (not shown); and an instep 160 arranged to facilitate the entry into the truck cab 100.

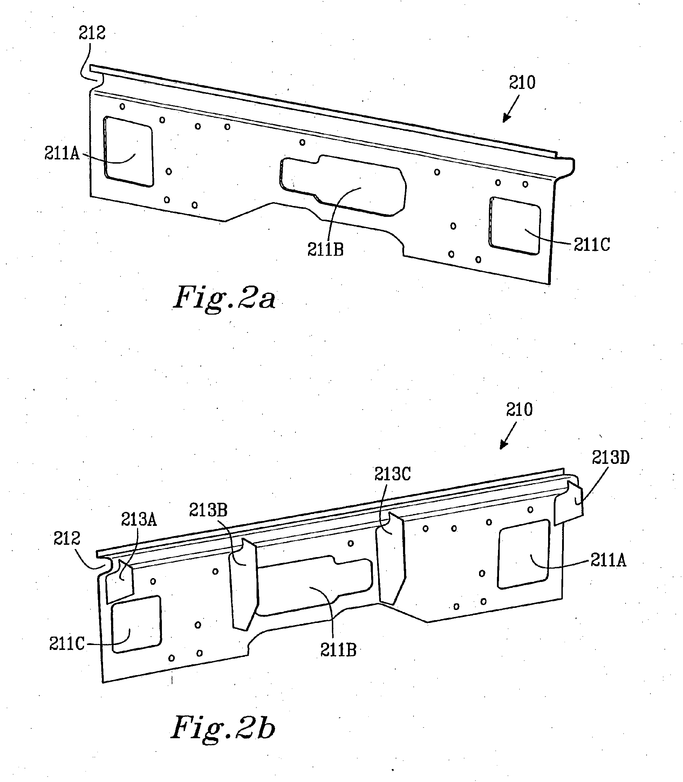

Fig. 2a shows a schematic view of an exemplifying inner firewall 210 according to an embodiment of the present invention. The exemplifying inner firewall 210 comprises three assembly openings 211A-211C adapted for a mounting of different cockpit units. It is preferred that the assembly openings 211A-211C in the inner firewall 210 are unique openings particularly adapted with small tolerances for a mounting of one or several specific cockpit units. Small tolerances imply that the assembly opening is slightly larger than the unit to be mounted into the opening, *e.g*. there may be only millimeters or fractions of millimeters between the unit and the edges of the assembly opening. This gives a more accurate unit position and it improves the utilization of the material in the inner firewall 210. Naturally, the assembly openings can also be made smaller, which improves the stability of the inner wall 210.

The assembly openings 211A-211C in the inner firewall 210 correspond to the receiving openings 111A-111C in the body-in-white firewall 110, which receiving openings 111A-111C are arranged to receive one or several cockpit units mounted into the assembly openings 211A-211C in the inner firewall 210. For example, let us assume that the left receiving opening 111A of the body-in-white firewall 110 is arranged to receive pedal plate and steering wheel adjustment units, whereas the center receiving opening 111B is arranged to receive a HVAC unit and the right receiving opening 111C is arranged to receive an electrical central unit. Under this assumption the exemplifying inner firewall 210 will have its left assembly opening 211A adapted for an assembly of pedal plate and steering wheel adjustment units, whereas the center assembly opening 211B is adapted for an assembly of a HVAC unit and the right assembly opening 211C is adapted for an assembly of an electrical central unit.

The assembly openings 211A-211C in the inner firewall 210 are arranged so as to coincide with the receiving openings 111A-111C of the body-in-white firewall 110 upon an attachment of the outer side of the inner firewall 210 shown in Fig. 2a to the inner side of the body-in-white firewall 110 shown in Fig. 1. However, even if the openings 111A-111C and 211A-211C coincide there must not necessarily be a complete and identical match. On the contrary, the receiving openings 111A-111C can be larger than the assembly openings 211A-211C. The receiving openings 111A-111C and the assembly openings 211A-211C may also have different shapes, *i.e.* they must not necessarily have the same shape.

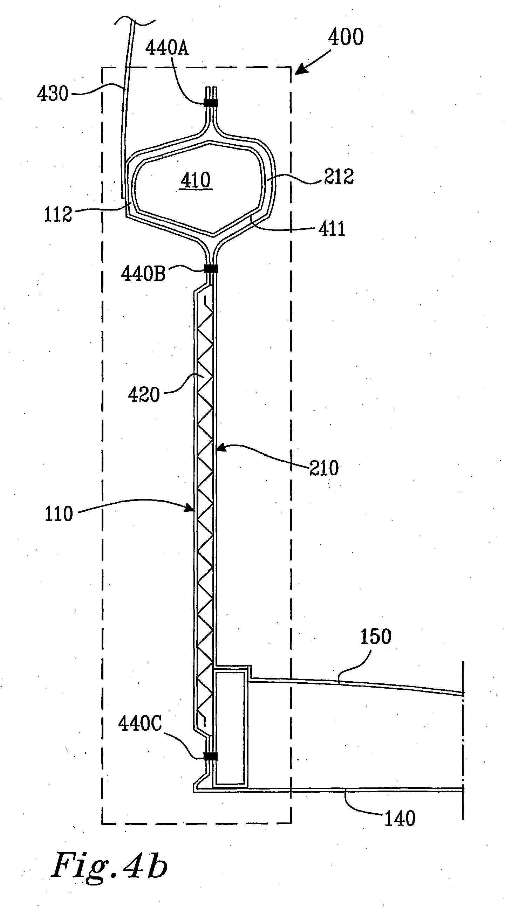

In addition, as can be seen in Fig. 2a the exemplifying inner firewall 210 comprises a recess in the form of a C-shaped elongated beam 212 at its upper long side. The C-shaped beam 212 is arranged so as to form a channel or duct when the outer side of the inner firewall 210 is attached onto the inner side of the body-in-white firewall 110. The duct and its advantages will be further described below with reference to Fig. 4b.

Fig. 2b shows the inner side of the inner firewall 210 in Fig. 2a. The inner side of the inner firewall 210 is preferably provided with a plurality of assembly brackets 213A-213D. The particular inner firewall 210 in Fig. 2b is provided with four assembly brackets 213A-213D arranged in a vertical direction at the sides of the assembly openings 211A-211D to facilitate a mounting of cockpit sub-units into the assembly openings 211A-211C. Naturally there are other means, such as *e.g*. a framework arrangement, that can be used for facilitating a mounting of sub-units into the assembly openings 211A-211D.

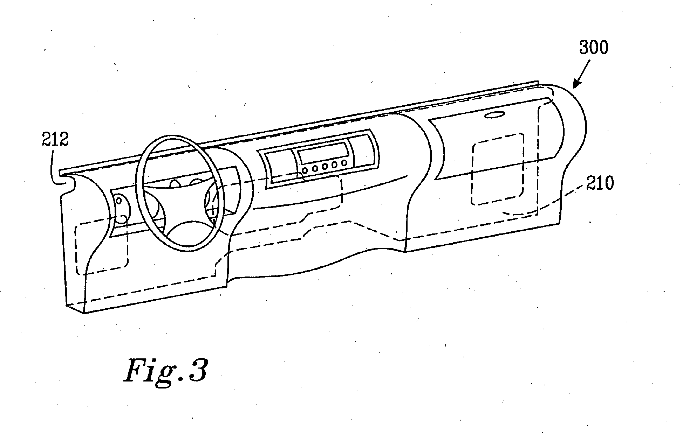

Fig. 3 shows the inner firewall 210 provided with cockpit sub-units mounted into the assembly openings 211A-211C thereof. The inner firewall 210 and the mounted cockpit sub-units form a sub-assembly in the form of a cockpit module 300. The cockpit module 300 is preferably completely assembled, *i.e.* substantially all cockpit sub-units such as dashboard units and the above mentioned pedal plate unit, steering column adjustment unit, HVAC unit and electrical central unit etc. are mounted on the inner firewall 210. It is preferred that the substantially complete cockpit module 300 also comprises the typical outer shell 310 of a suitable plastic material which constitutes the interior panel surfaces seen by the driver and passengers in the cockpit.

From the above it should be clear that the sub-assembly in the form of an exemplifying cockpit module 300 is assembled without the use of any extra mounting jig or fixture or other support arrangement. Rather, the inner firewall 210 is used as a frame for assembling the cockpit module 300. This is a clear improvement compared to known assembling methods that use various mounting jigs or fixtures for the assembly of a cockpit module.

From the above it should also be clear that the body-in-white firewall 110 *remains fixedly attached* in the truck cab 100 while the inner firewall 210 is used as a frame for assembling the cockpit module 300. This is a clear advantage compared to solutions wherein the entire firewall *is detached* from the vehicle cab to be used as a frame for assembling a cockpit module. It is also a clear advantage in that an inner firewall 110 according to the present invention can be made much lighter than an entire firewall.

It is furthermore a clear advantage to have the body-in-white firewall 110 fixedly attached with respect to: the stability of the cab 100, an early mounting of parts that should be mounted on both the firewall 110 and the cab 100 and the fitting of a windscreen onto the firewall 110 and the rest of the cab 100.

In particularly with respect to the fitting of a windscreen it should be emphasized that a fixedly attached body-in-white firewall 110 according to the present invention provides a homogenous surface on which the windscreen can be mounted. The homogenous surface has no assembly joints between the cab 100 and the firewall 110, which is the case if the entire firewall of a cab is used as a loose detached assembly frame. It follows that the present invention avoids the tolerance complications related to assembly joints between the cab and a detached loose firewall and the negative effects of such tolerance complications on the windscreen fitting. In addition, the homogenous surface produced by the body-in-white firewall 110 fixedly attached to the cab 100 according to the present invention does not require any joining or sealing between the cab 100 and the body-in-white firewall 110. Rather, the present invention has only one joint to be sealed, *i.e.* the joint between the windscreen and the cab 100, which homogenously includes the body-in-white firewall 110. In other words, there is no need for several different and possibly incompatible joining means and/or sealing means, which however is typically the case for the different joints in connection with a detached loose firewall (joints between: cab<->firewall; cab<->windscreen; firewall<->windscreen).

We will now proceed with a mounting into the cab 100 of the substantially complete cockpit module 300. We will also discuss the laminated firewall 400 accomplished by such a mounting.

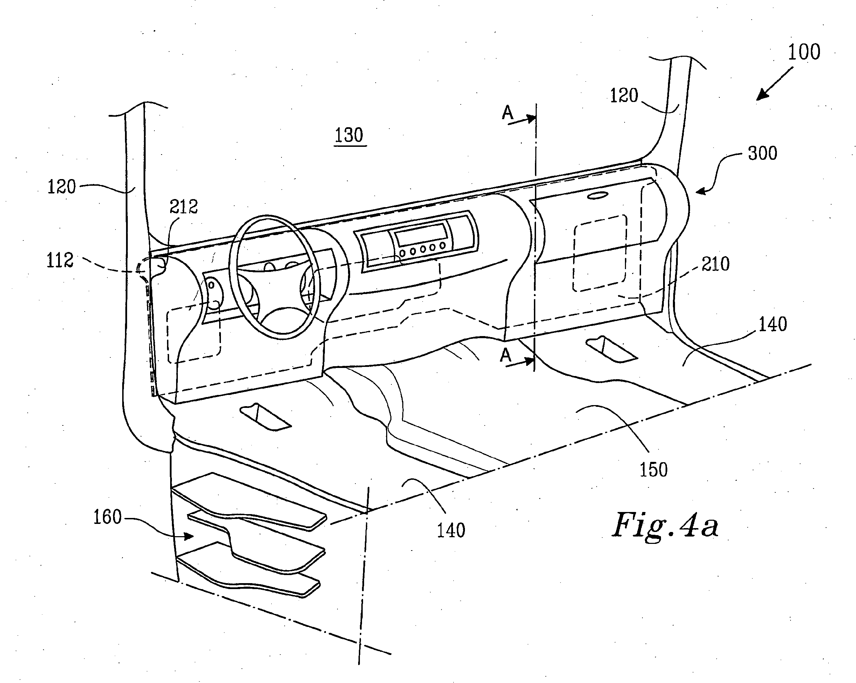

Fig. 4a shows the cockpit module 300 mounted into the truck cab 100 shown in Fig. 1, which as previously described comprises the body-in-white firewall 110 with the C-shaped windscreen member 112, two A-pillars 120, a floor 140, an engine tunnel 150 and an instep 160.

The cockpit module 300 is preferably mounted by means of an assembly robot, though a manual mounting may be an alternative. The cockpit module 300 can *e.g*. be brought in to the cab 100 via a door opening or the windscreen opening 130. It is preferred that the cockpit module 300 is mounted towards the body-in-white firewall 110 by a final substantially horizontal movement in the Z-direction, *i.e.* in the same direction as the intended traveling direction of the cab 100. The cockpit module 300 is then preferably guided by guiding means, *e.g*. guiding pins (not shown), so as to assume the correct position towards the body-in-white firewall 110 before it is fixedly attached. The attachment of the exemplifying inner firewall 210 will be further discussed below.

Fig. 4b shows a cross-section of the mounted cockpit module 300 taken along the line A-A in Fig. 4a. Several, parts of the cockpit module 300 have been omitted to produce a clearer view of the body-in-white firewall 110 and the inner firewall 210. Fig. 4b is also showing a side view of the engine tunnel 150 and the floor 140 previously mentioned with reference to Fig. 1 and 4a. A windscreen 430 mounted onto the body-in-white firewall 110 is also schematically Illustrated in Fig. 4b.

As can be seen in Fig. 4b and partly in Fig. 4a the outer side of the inner firewall 210 is mounted towards the inner side of the body-in-white firewall 110, *i.e.* the cockpit module 300 is mounted towards the inner side of the body-in-white firewall 110 via the outer side of the inner firewall 210. The body-in-white firewall 110 and the inner firewall 210 are hereby creating a laminated firewall 400.

According to the embodiment of the invention shown in Fig. 4b a defroster duct 410 is formed by the C-shaped windscreen member 112 of the body-in-white firewall 110 and the C-shaped beam 212 of the inner firewall 210. As can be seen in Fig. 4b and partly in Fig. 4a the C-shaped windscreen member 112 and the C-shaped beam 212 are facing each other so as to form an oval-shaped defroster duct 410. However, even if the windscreen member 112 and the beam 212 are C-shaped in the present embodiment it should be emphasized that there are other shapes that can be used for the body-in-white firewall 110 and the inner firewall 210 which shapes would likewise create a defroster duct. Other shapes may *e.g*. be any suitable polygonal shape or any suitable curved or rounded shape or any suitable combination of polygonal and rounded shapes. It is preferred that the body-in-white firewall 110 comprises a first part of the shape and that the inner firewall 210 comprises a second part of the shape arranged so as to create a duct when the outer side of the inner firewall 210 is mounted towards the inner side of the body-in-white firewall 110.

In addition, it is preferred that the laminated firewall 400 is accomplished by arranging the body-in-white firewall 110 and the inner firewall 210 separated by a short distance, *e.g*. 10-50 millimeters. The distance between the two walls 110, 210 creates a compartment which is preferably filled with a suitable insulating material 420. It is preferred that the insulating material 420 is a sound insulating material, *e.g*. any well known and suitable sound insulating material commonly used in connection with sound insulation of passenger compartments in vehicles. It is also preferred that the insulating material 420 is a climate insulating material, *e.g*. any well known and suitable climate insulating material commonly used in connection with climate insulation of passenger compartments in vehicles. It is particularly preferred that the insulating material 420 is both sound insulating and climate insulating. This can be achieved by *e.g*. utilizing layers of different materials where a first material is sound insulating and a second material is climate insulating. This can also be achieved by *e.g*. utilizing the sound insulating properties of a climate insulating material or by utilizing the climate insulating properties of a sound insulating material, or by simply utilizing a material having satisfactory sound insulating properties and satisfactory climate insulating properties. The expression "climate insulating" should be understood as insulating from at least one of heat or cold and preferably from both heat and cold.

It is furthermore preferred that the cockpit module 300 is fixedly attached to the body-in-white firewall 110 by means of assembly points 440A-440C provided on the outside of the cab 100. This makes it easy for an assembly robot to access the assembly points 440a-440C for attaching the inner firewall 210 to the body-in-white firewall 110. The attachment can *e.g*. be accomplished by means of screwing, riveting, welding, soldering or even gluing, or a combination of two or several of these methods or by any other method suitable for joining such bodies as the inner firewall 210 and the body-in-white firewall 110,

The invention has now been described by means of embodiments, which should not be interpreted so as to limit the scope of the invention in any way. On the contrary, other modifications and variations can be made without departing from the invention defined by the appended claims.

## Claims

1. A vehicle body (100) with a laminated wall (400) comprising a first wall (210) and a second wall (110) that is fixedly attached to the vehicle body (100) and provided with a plurality of receiving openings (111A-111C). wherein the first wall (210) has a plurality of assembly openings (211A-211C) each provided with at least one sub-unit so as to form a substantially complete sub-assembly (300) of the vehicle body (100), and each being arranged so as to substantially coincide with a corresponding receiving opening (111A-111C) when the outer side of the first wall (210) is attached to the inner side of the second wall (110), and the outer side of the first wall (210) is attached to the inner side of the second wall (110) so that each assembly opening (211A-211G) substantially coincides with at least one receiving opening (111A-111C) to form said laminated wall (400)
**characterized in that**:
the second wall (110) is a body-in-white firewall fixedly attached to the vehicle body (100) and comprising a windscreen member (112), so as to form a substantially homogenous body with the vehicle body (100), and that the second wall (110) is provided with assembly points (440A-440C) for attaching the first wall to the second wall (110), and **in that** the inner side of the first wall (210) is provided with at least one assembly means (213A-213D) - e.g. an assembly bracket or a framework - for facilitating the mounting of sub-units into the assembly openings (211A-211D).

2. A vehicle body (100) according to claim 1, **characterized in that**: the first wall (210) is provided with at least one assembly opening (211A-211C) being unique with respect to e.g. shape and size so as to be particularly adapted with small tolerances for mounting of one or several specific sub-units.

3. A vehicle body (100) according to claim 1, **characterized in that**: the inner side of the first wall (210) is provided with sub-units mounted in the assembly openings (211A-211D) so as to form a substantially complete sub-assembly, e.g. a cockpit module (300).

4. A vehicle body (100) according to claim 1, **characterized in that**: the second wall (110) is provided with at least two receiving openings (111A, 111C) that are substantially symmetrically arranged on each side of the center of the second wall (110).

5. A vehicle body (100) according to claim 1, **characterized in that**: the outer side of the first wall (210) has an elongated upper recess (212) and the inner side of the second wall (110) has a corresponding elongated upper recess (112), which together forms a duct (410).

6. A vehicle body (100) according to claim 1, **characterized in that**: the first wall (210) is arranged a distance from the second wall (110) so as to create a compartment between the walls (110, 210) that is filled with sound isolating material (420).

7. A vehicle body (100) according to claim 1, **characterized in that**: the first wall (210) is fixedly attached to the second wall (110) by means of assembly points (440A-440C) arranged on the outside of the vehicle body (cab 100).

8. A vehicle body (100) according to any one of claims 1-7, **characterized In that**: the vehicle body is a cab (100) for a cargo carrying truck and the laminated wall (400) is a partition wall (firewall) arranged in front of the seat positions in the cab (100).

## Patentansprüche

1. Fahrzeugkarosserie (100) mit einer mehrschichtigen Wand (400), die eine erste Wand (210) und eine zweite Wand (110) umfasst, die an der Fahrzeugkarosserie (100) fest angebracht und mit einer Vielzahl von Aufnahmeöffnungen (111A-111C) versehen ist, wobei die erste Wand (210) eine Vielzahl von Montageöffnungen (211A-211C) aufweist, die jeweils mit wenigstens einer Untereinheit versehen sind, so dass eine im Wesentlichen vollständige Unteranordnung (300) der Fahrzeugkarosserie (100) gebildet wird, und die jeweils so angeordnet sind, dass sie im Wesentlichen mit einer entsprechenden Aufnahmeöffnung (111A-111C) zusammenfallen, wenn die Außenseite der ersten Wand (210) an der Innenseite der zweiten Wand (110) angebracht ist, und wobei die Außenseite der ersten Wand (210) an der Innenseite der zweiten Wand (110) so angebracht ist, dass jede Montageöffnung (211A-211C) im Wesentlichen mit wenigstens einer Aufnahmeöffnung (111A-111C) zusammenfällt, so dass die mehrschichtige Wand (400) gebildet wird,
**dadurch gekennzeichnet,**
**dass** die zweite Wand (110) eine Rohkarosserie-Feuerwand ist, die an der Fahrzeugkarosserie (100) fest angebracht ist und ein Windschutzscheibenelement (112) umfasst,
so dass ein im Wesentlichen homogener Körper mit der Fahrzeugkarosserie (100) gebildet wird, und dass die zweite Wand (110) mit Montagepunkten (440A-440C) zur Anbringung der ersten Wand an der zweiten Wand (110) versehen ist, und dass die Innenseite der ersten Wand (210) mit wenigstens einer Montageeinrichtung (213A-213D) - z. B. einer Montagehalterung oder einem Rahmen - zum Erleichtern der Anbringung von Untereinheiten in den Montageöffnungen (211 A-211 D) versehen ist.

2. Fahrzeugkarosserie (100) nach Anspruch 1, **dadurch gekennzeichnet, dass** die erste Wand (210) mit wenigstens einer Montageöffnung (211A-211C) versehen ist, die hinsichtlich z. B. ihrer Form und Größe so einzigartig ist, dass sie mit kleinen Toleranzen speziell für die Anbringung von einer oder mehrerer spezifischer Untereinheiten angepasst ist.

3. Fahrzeugkarosserie (100) nach Anspruch 1, **dadurch gekennzeichnet, dass** die Innenseite der ersten Wand (210) mit Untereinheiten versehen ist, die in den Montageöffnungen (211A-211D) angebracht sind, so dass eine im Wesentlichen vollständige Unteranordnung, z. B. ein Cockpitmodul (300), gebildet wird.

4. Fahrzeugkarosserie (100) nach Anspruch 1, **dadurch gekennzeichnet, dass** die zweite Wand (110) mit wenigstens zwei Aufnahmeöffnungen (I11A, I11C) versehen ist, die im Wesentlichen symmetrisch auf jeder Seite von der Mitte der zweiten Wand (110) angeordnet sind.

5. Fahrzeugkarosserie (100) nach Anspruch 1, **dadurch gekennzeichnet, dass** die Außenseite der ersten Wand (210) eine langgestreckte obere Aussparung (212) aufweist und die Innenseite der zweiten Wand (110) eine entsprechende langgestreckte obere Aussparung (112) aufweist, die zusammen einen Kanal (410) bilden.

6. Fahrzeugkarosserie (100) nach Anspruch 1, **dadurch gekennzeichnet, dass** die erste Wand (210) in einem Abstand von der zweiten Wand (110) angeordnet ist, so dass ein Raum zwischen den Wänden (110, 220) geschaffen wird, der mit schallisolierendem Material (420) gefüllt ist.

7. Fahrzeugkarosserie (100) nach Anspruch 1, **dadurch gekennzeichnet, dass** die erste Wand (210) an der zweiten Wand (110) mittels Montagepunkten (440A-440C) fest angebracht ist, die an der Außenseite der Fahrzeugkarosserie (cab 100) angeordnet sind.

8. Fahrzeugkarosserie (100) nach irgendeinem der Ansprüche 1-7, **dadurch gekennzeichnet, dass** die Fahrzeugkarosserie eine Kabine (100) für einen eine Ladung transportierenden Lastwagen und die mehrschichtige Wand (400) eine vor den Sitzpositionen in der Kabine (100) angeordnete Trennwand (Feuerwand) ist.

## Revendications

1. Carrosserie de véhicule (100) avec une paroi stratifiée (400) comprenant une première paroi (210) et une deuxième paroi (110) qui est attachée de manière fixe à la carrosserie du véhicule (100) et dotée d'une pluralité d'ouvertures de réception (111A-111C), dans laquelle la première paroi (210) a une pluralité d'ouvertures d'assemblage (211A-211C) dotée chacune d'au moins une sous-unité de façon à former un sous-ensemble (300) essentiellement complet de la carrosserie de véhicule (100), et chacune étant agencée de manière à coïncider essentiellement avec une ouverture de réception correspondante (111A-111C) lorsque le côté externe de la première paroi (210) est attaché au côté interne de la deuxième paroi (110), et le côté externe de la première paroi (210) est attaché au côté interne de la deuxième paroi (110) de sorte que chaque ouverture d'assemblage (211A-211C) coïncide essentiellement avec au moins une ouverture de réception (111A-111C) pour former ladite paroi stratifiée (400), **caractérisée en ce que** :
la deuxième paroi (110) est un tablier d'une carrosserie brute attaché de manière fixe à la carrosserie de véhicule (100) et comprenant un élément de pare-brise (112), de manière à former un corps essentiellement homogène avec la carrosserie de véhicule (100), et **en ce que** la deuxième paroi (110) est dotée de points d'assemblage (440A-440C) pour fixer la première paroi à la deuxième paroi (110), et **en ce que**
le côté interne de la première paroi (210) est doté d'au moins un moyen d'assemblage (213A-213D), par exemple, une structure ou un support d'assemblage, pour faciliter le montage des sous-unités dans les ouvertures d'assemblage (211A-211D).

2. Carrosserie de véhicule (100) selon la revendication 1, **caractérisée en ce que** : la première paroi (210) est dotée d'au moins une ouverture d'assemblage (211A-211C) qui est unique en ce qui concerne, par exemple, la forme et la taille de manière à être particulièrement adaptée à des faibles tolérances pour le montage d'une ou de plusieurs sous-unité(s) spécifique(s).

3. Carrosserie de véhicule (100) selon la revendication 1, **caractérisé en ce que** : le côté interne de la première paroi (210) est doté de sous-unités montées dans les ouvertures d'assemblage (211A-211D) de manière à former un sous-ensemble essentiellement complet, par exemple, un module de poste de conduite (300).

4. Carrosserie de véhicule (100) selon la revendication 1, **caractérisée en ce que** : la deuxième paroi (110) est dotée d'au moins deux ouvertures de réception (111A, 111C) qui sont agencées de façon essentiellement symétrique sur chaque côté du centre de la deuxième paroi (110).

5. Carrosserie de véhicule (100) selon la revendication 1, **caractérisée en ce que** : le côté externe de la première paroi (210) a un évidement supérieur allongé (212) et le côté interne de la deuxième paroi (110) a un évidement supérieur allongé correspondant (112), qui forment ensemble un conduit (410).

6. Carrosserie de véhicule (100) selon la revendication 1, **caractérisée en ce que** : la première paroi (210) est agencée à une certaine distance de la deuxième paroi (110) de manière à créer un compartiment entre les parois (110, 210) qui est rempli d'un matériau d'isolation acoustique (420).

7. Carrosserie de véhicule (100) selon la revendication 1, **caractérisée en ce que** : la première paroi (210) est attachée de manière fixe à la deuxième paroi (110) au moyen des points d'assemblage (440A-440C) agencés sur la partie extérieure de la carrosserie de véhicule (cabine 100).

8. Carrosserie de véhicule (100) selon l'une quelconque des revendications 1 à 7, **caractérisée en ce que** : la carrosserie de véhicule est une cabine (100) pour un camion de transport de marchandises et la paroi stratifiée (400) est une paroi de séparation (tablier) agencée devant les positions de siège dans la cabine (100).
